# EUROPEAN PATENT APPLICATION

(11) **EP 3 109 838 A1**
(43) Date of publication of application: **28.12.2016**
(21) Application number: 16176489.9
(22) Date of filing: 27.06.2016
(51) Int. Cl.: G07G 1/00, G06Q 20/32

(54) **MOBILE DEVICE BASED DIGITAL WALLET FOR RETAIL SHOPPING, RELATED SYSTEM AND METHOD**

(30) Priority: 26.06.2015 GB 201511244
(71) Applicant: Aspholm Invest Oy, 65230 Vaasa (FI)
(72) Inventor: ASPHOLM, Jacob, 65230 Vaasa (FI)
(74) Representative: Berggren Oy Ab

(57) **Abstract**

Mobile device (104) for purchasing products (106) in a store, comprising processing unit (202) for processing instructions (203) and data, memory (204) for storing instructions and data, respectively, display (206) for visualizing data, user input interface (208) for obtaining user input from a user of the device, product data interface (212) for wirelessly obtaining product data, and wireless communication network interface (210) for communicating with a remote server (114), the device being configured to, in accordance with the instructions stored in the memory, capture, via said product data interface, product codes (108), associated with a corresponding number of products selected by the user for purchase, and establish an virtual shopping cart (104A), said cart accommodating an indication of the products therein, add up the amounts associated with the products and visualize the total (105C) via the display, receive, via the user input interface, confirmation (105D) from the user for the transaction having regard to the products in the cart and the total, and communicate, via the wireless communication network interface, an indication of the user-confirmed transaction to the server, wherein the device is further configured to wirelessly indicate (105F) the transaction to store equipment (120) for locally checking out at the store. Related system and methods are presented.

## Description

### FIELD OF THE INVENTION

The present invention relates generally to electronic aids in the context of shopping. Especially, however not exclusively, the invention pertains to a mobile communications device and method for utilization thereof upon a shopping journey for registering and paying a picked up product.

### BACKGROUND

Traditional way of shopping incorporates navigating through store premises while placing goods in a shopping cart or basket and ultimately removing them one by one for optical price scan and total calculation at the checkout by the cashier, followed by payment operation involving cash or credit card and finally packing the products e.g. in a paper or plastic bag for convenient transportation to the use or storage location.

In practice, a barcode following e.g. UPC (Universal Product Code) standard is read by a laser scanner from the printed sticker or integral label on the product by the cashier, whereupon the price of the optically identified item is retrieved from a shop's database functionally connected to the reader system. Ultimately, also the related inventory data are updated to reflect the recent transaction.

Further, so-called self-checkout systems have popped up during the last two decades. With a self-checkout system, a customer is required or entitled, depending on the viewpoint, to autonomously scan the product barcodes while picking them up or at the checkout using a portable rental scanner device or a scanner integrated with the checkout equipment, respectively. The portable rental scanner may be provided by the merchant at the store entry, for example. After the shopping round, the customer is usually required to place all the scanned items on a bagging surface verifying the weight of the items against reference data that is determined based on the identity of the scanned items. The scanned data is retrieved to the checkout equipment from the integral or portable scanner, via a docking station, for payment, which is typically executed using credit cards or cash (bank notes, coins) and related user input via a payment terminal provided with the equipment.

Nevertheless, the great majority of currently available checkout and payment options at stores are sub-optimum in a variety of ways. The scanners are tedious to use and vary from a store or chain to another. This applies both to portable and integral versions. More commonly used integral versions of scanner devices even introduce considerable delays at the checkout at least occasionally as the scanning of the barcode tags of a large number of products inevitably takes some time and there may not be enough checkout desks available in each concerned store. Further, credit card payments, even though being often considered less awkward and time consuming than twiddling with cash, involve problematic issues and risks.

First of all, the payment operation usually requires remembering and entering a PIN (personal identification number) code on the card reader. Forgetting the code translates into a closed credit account and related annoying re-opening procedure. Secondly, one has to carry the card, cash or other dedicated means of payment along in the first place. Yet, monitoring one's expenditure is difficult in connection with card payments as the only limiting factor is the overall credit limit more or less fixedly associated with each particular card in question. Still, current scanner based solutions, particularly when combined with contemporary payment procedures, do not really free personnel from ordinary guidance or checkout work, actually exactly the opposite as basically nobody of the customers is not that well acquainted with the always changing scanner devices and related procedures. Ultimately, the scanners and associated equipment are clinical, non-personal apparatuses that provide very generic service and use experience to the customers although modern technology in general could be harnessed into assistance and guidance performances of whole another level.

### SUMMARY

An object of the present invention is to at least alleviate one or more of the aforesaid problems relating to the prior art.

The objective of the present invention can be achieved by the features of independent claims.

According to an embodiment, a mobile personal communications device for purchasing products in a store, preferably a hand-held smartphone, phablet or tablet computer, comprises a processing unit for processing instructions and data, memory for storing instructions and data, respectively, a display for visualizing data, a user input interface for obtaining user input from a user of the device, a product data interface for wirelessly obtaining product data, and a wireless communication network interface for communicating with a remote server, the device being configured to, in accordance with the instructions stored in the memory,
capture, via said product data interface, a number of product codes, associated with a corresponding number of products selected by the user for purchase, and establish an virtual shopping cart visualized via the display, said cart accommodating an indication of the products therein,
add up the amounts associated with the products and visualize the total via the display,
receive, via the user input interface, confirmation from the user for the transaction having regard to the products in the cart and the total, and
communicate, via the wireless communication network interface, an indication of the user-confirmed transaction to the server,
wherein the device is configured to wirelessly indicate the transaction to store equipment for locally checking out at the store.

In one embodiment, the transaction is indicated optically e.g. via the display preferably utilizing a numeric, alphanumeric, bar, or matrix (bar) code shown thereon. Alternatively or additionally, textual data may be provided. The store equipment shall comprise a compatible device for receiving the information, preferably optical scanner device such as a laser scanner or a camera.

In one other, either alternative or supplementary, embodiment, the device comprises a wireless short-range communications interface such as RFID (Radio-frequency identification) or NFC (Near-Field Communication) device (including transmitter or transmitter-receiver) for indicating the transaction. Alternatively or as an additional option, e.g. WLAN (Wireless LAN, local area network) transceiver may be included in the device for indicating the transaction.

In some embodiments, the wireless communication network interface comprises a cellular network interface (transceiver) and/or a wireless local-area network interface, e.g. WLAN transceiver.

In a further, either alternative or supplementary, embodiment, the product data interface comprises an optical scanner or generally a reader, optionally incorporating a laser scanner or CCD (charge-coupled device) reader, or a camera. Alternatively or additionally, the product data interface may include a wireless tag reader, such as the aforesaid RFID or NFC device for receiving the product codes.

In a further, either alternative or supplementary, embodiment, the product code is, indicates or comprises an identifier of the associated product. Preferably, the identifier is globally or at least locally unique. The identifier may comprise numeric data, textual data, or alphanumeric data, for example. The product code may indicate a Global Trade Item Number (GTIN) or some other product identifier. The code itself may follow or include a code of e.g. UPC, UPC-E, EAN (European Article Number), EAN-13, EAN-8 or JAN (Japanese Article Number) format. Alternatively, the code may be proprietary or at least contain proprietary element(s).

Still in a further, either alternative or supplementary, embodiment, a product code captured comprises or is linked with amount (price) that is retrieved and adopted in the visualized virtual shopping cart. In some embodiments, the code indeed includes indication of the amount, i.e. the price is encoded as well. In some other embodiments, in addition to the code the amount is provided along with the code, the two elements may be adjacent to each other or e.g. nested, and captured using the same product data interface.

In some embodiments, the device may contain a local database for retrieving the amount based on the captured product code. The database or a corresponding entity links the two information elements together. The local database may be retrieved and/or updated from a remote source.

In some embodiments, the device may be configured to utilize communication interface such as the aforesaid wireless communication network interface, e.g. cellular transceiver or WLAN interface, or e.g. short-range communications interface such as Bluetooth™, which may also refer to Bluetooth LE ™ (low energy), interface for obtaining product data associated with the product code from a remote source, such as a predefined server and e.g. related database. The product data may include e.g. product description/profile and/or price data. In some embodiments, the aforesaid database stored locally may be initially retrieved or updated from the remote source.

The virtual shopping cart comprises and optionally visually indicates at least one element selected from the group consisting of: product code, product description (or 'profile', e.g. 'Fat-free milk 1 litre'), amount, quantity, total, currency, balance of the account associated with the cart, and remaining balance if the listed products are really bought. Alternatively, the balance and/or e.g. future remaining balance if the products listed are really paid for, can be shown elsewhere on the display view or particularly application view of the device to the user.

In preferred embodiments, the device is configured to wirelessly obtain a location-specific, in practice e.g. store-specific, mall-specific or chain-specific identifier. The identifier may be obtained using the product data interface, such as optical reader/scanner/camera or short-range communications interface (e.g. NFC/RFID). Responsive to the receipt and recognition of the identifier, the device is configured to execute a number of predetermined actions.

For example, an application containing at least part of the program logic in the form of computer executable instructions for gathering product codes, maintaining the shopping cart, determining and indicating the total, and signalling transaction details, may be launched or otherwise activated. The configuration of the application/cart may be adapted responsive to the detected location, such as the particular store in question. An empty shopping cart may be established or an existing shopping cart or shopping list activated among other options.

The location-specific identifier may be thus obtained via a dedicated optical reader application running in the device, or the reading functionality may be integral with shopping and payment application.

In some embodiments, the identifier may be common among two or more locations/stores. It may still cause the application to activate and/or to enter a shopping mode involving a shopping cart, or some other predefined mode.

In some embodiments, an external display, which may refer to electronic display or e.g. printed note on a board, may contain the identifier e.g. in the form of a barcode such as a matrix barcode, e.g. QR (Quick Response) code ™. Such display may be disposed at the store entrance and/or at a number of locations within the store (e.g. spatially spread) so that upon entering the store or certain region within the store provided with the display, the user may conveniently activate the virtual shopping aid and payment application in the personal mobile device with appropriate location-specific, e.g. store-specific, settings. The product data interface involving e.g. camera may be utilized for capturing the identifier on the display. Suitable separate or integral software such as QR code reader software may be utilized for reading the code and activating the application as mentioned hereinbefore.

Alternatively, the identifier may be transferred e.g. via an electromagnetically readable tag so that the short-range communications interface such as RFID, NFC, or Bluetooth ™ based interface is applicable for receiving it. Capture of the identifier and resulting activation of the application or application mode (e.g. shopping mode) may be automated provided that communications interface in question has been set on and is ordered by the application to monitor signals indicative of tags or other devices capable of providing such identifier. Automatic capture and resulting application launch may be user-configurable feature in the application settings.

In some embodiments, the device is configured to receive and reproduce commercials, product suggestions and/or guidance, such as navigation guidance.

Such received data may be location-based such as store-specific. The application running in the device may be configured to signal a remote entity, e.g. server, about the entrance to the current location context, e.g. particular store, and/or the specific location within the location context. Location-specific data may be received as a response.

Satellite signals such as GPS (Global Positioning System) signals and/or other wireless signals, optionally including digital map data such as floor plan data and/or product location data, may be captured by the device and utilized for positioning or indicating the position of the device and/or the product (target products to be positioned may be automatically or user-selected from a shopping list or defined by the user in real-time using the UI of the device, for instance). Alternatively, the store equipment at the location, such as Wi-Fi access points or other wireless elements, may be configured to receive signals transmitted by the device to enable positioning thereof using e.g. triangulation.

In preferred embodiments, the device is configured to provide a UI feature, such as icon or graphic symbol, or other selectable item, to enable the user to confirm the purchase of the products present in the virtual shopping cart.

Preferably, responsive to the receipt of such confirmation, the device is configured to trigger a payment procedure. The procedure may involve sending a message indicating the confirmation to a remote element, such as a predefined network service/server. The data transfer is preferably secure, i.e. encrypted utilizing e.g. 3DES (Triple Data Encryption Algorithm) or other DES based encryption mechanism. The confirmation may include transaction details such as the indication of the user, account (e.g. wallet id), store, listed items in the shopping cart (e.g. product codes, descriptions, quantities, etc.), product prices, and/or the total. Alternatively, such details may be signalled to the remote party prior to the confirmation, e.g. upon entering a new product in the cart or removing a product therefrom.

The device may be then configured to receive a confirmation from the remote element about the status of the payment, e.g. acceptance, rejection (e.g. insufficient balance), or a connection error. The confirmation may be locally stored and preferably indicated via the UI of the device, e.g. the display.

Responsive to the confirmation, the device may indeed be configured to indicate the performed transaction to the store equipment with predefined transaction details.

In some embodiments, the device is configured to authenticate the user as a requisite for using the shopping and payment application the functions of which have been described herein. The authentication may be single-factor or multi-factor based. For example, biometric factor such as fingerprint, iris, and/or voice may be authenticated using the mobile device equipped with suitable sensing (reader) technology. For example, optical or capacitive fingerprint scanner may be included. Microphone may be included with necessary voiceprint comparison logic to enable voice (speaker) recognition. Iris recognition may be implemented by means of camera-based image data analysis. Also e.g. a secret password or code (e.g. PIN code), i.e. knowledge factor, may be used. The code may be input using e.g. keypad, touchscreen, or voice interface of the device. Additionally or alternatively, authentication may be required in confirming the purchase via the mobile UI.

In some embodiments, the device is configured to transmit ID data such as user or device identifier to store equipment. This may take place responsive to obtaining the location-specific identifier mentioned above or responsive to a specific triggering action based on user input, for example, via the UI of the device. The ID data may be utilized by the system to offer personalized service such as offers or guidance.

According to one more embodiment, an electronic system for enabling mobile payments of physical products in a physical store, comprises
a data repository, optionally a database, configured to store user account data for mobile wallets of a number of users, including balance data and preferably history data having regard to past transactions, optionally including transaction amounts and descriptions (e.g. source/destination),
transaction processing module configured to update account data stored in the repository including the balance of a user in response to receiving an indication of a user-confirmed transaction having regard to the account associated with the user, and
store equipment functionally connected to said transaction processing module and configured to wirelessly obtain, from the mobile personal communications device of the user, an indication of a user-confirmed transaction having regard to a purchase of a number of products in said store, wherein the store equipment is configured to verify the transaction based on the indication and provide at least related visual feedback to the user.

In the above, the store equipment is functionally connected to the transaction module and data repository, which may refer to either substantially real time connection via one or more communication networks thereto or non-real time data transfer that may take place, e.g. sequentially, via one or more intermediate systems, for example. The store equipment may be configured to connect to the transaction processing module or at least one third party system (e.g. financial service, online payment system/operator, financial institution, etc.) that is connected to the module for obtaining proof or other details about the transaction. In some embodiments, such remote proof shall be obtained to verify the transaction and basically let the user exit the store, for example, whereas in some other embodiments, the verification may be based on locally available data, e.g. data obtained with the indication. The indication may include transaction processing module -generated data items, such as a code or a checksum, which can be locally verified without a need to connect to external systems for real-time verification.

According to one embodiment of the system, the data repository and transaction processing module are at least logically centralized or shared having regard to e.g. multiple stores whereas a store is provided with at least partially dedicated and/or local store equipment.

Still according to one, either supplementary or alternative embodiment, the store equipment may comprise an optical scanner (e.g. laser), reader (e.g. CCD), or a camera for obtaining the indication.

The local store equipment may further comprise a display for providing instructions and the feedback.

Additionally or alternatively, the equipment may comprise a printer to provide the feedback in a tangible, printed form. Preferably, the at least visual feedback comprises a receipt of the transaction. At least the scanner, reader, camera, display and/or printer of the local store equipment may be disposed at the checkout area in the store.

According to yet one other, either supplementary or alternative, embodiment the transaction processing module is configured to credit a user account based on a received indication of electronic funds transfer. The transaction processing module may be functionally, e.g. via a communication interface, connected to an electronics system of a financial institution such as a bank, a financial service (e.g. credit company such as Amex ™) or online payment system such as PayPal ™ or bitcoin ™ for transferring (receive and/or transmit) deposit or withdrawal orders. Each account may support one or more currencies and optionally enable transactions such as payments in any of those either directly or via a conversion procedure.

According to a further, either supplementary or alternative embodiment, the system comprises product data module and associated product data repository, optionally associated with ERP (Enterprise Resource Planning) and/or PIM (Product Information Management) system, which is configured to receive indication of a product, such as product code, and respond with product data associated with the product code, optionally e.g. product description/profile and/or price data. The product data module may be store or chain-specific, for example.

According to a further, either supplementary or alternative embodiment, the system may comprise a local store display, board or stand for visually indicating a store identifier or the location of a wireless tag configured to wirelessly output the identifier to the mobile personal communications device of the user. Accordingly, the shopping and payment application in the communications device may be activated with proper configuration relative to the particular store.

According to a further, either supplementary or alternative embodiment, the system may comprise a positioning module for providing the mobile personal communications device of the user with commercial information such as advertisement, offer and/or guidance, such as navigation guidance having regard to the location of the device, which may refer to the overall location context (e.g. particular store) or more precise location within the context (e.g. department or coordinates).

In some embodiments, the mobile personal communications device of a user may be configured to indicate a device or user-related identifier to the system as mentioned hereinbefore. Accordingly, the system may be configured to provide personalized service in return, such as personal offers based on e.g. stored user preferences. Alternatively or additionally, the system could be configured to associate certain resources such as certain sales staff with certain customers. The association could be indicated in the maintained digital customer records accessible by the system. Detection of a particular customer at store entrance or within the store by the received identifier might then trigger sending a notification message or other signal to a predetermined recipient(s), preferably store personnel such as the associated sales staff. They could then act accordingly and enter the sales premises to assist the regular in shopping, for example. A person skilled in the art will acknowledge the fact that this type of solution striving for personalized service experience could be also implemented as a stand-alone service not requiring the realization of actual account or transaction management in the hosting system.

The system may further comprise an analytics module configured to analyze the transaction data and/or location data associated with users visited the store. A number of statistics and/or user profiles may be determined based thereon.

The system may further comprise a number of digital product labels or 'tags', each associated with one product type or product instance. The labels may exhibit the product code and/or other product data, such as description and/or price, optionally in the form of a matrix code, for capturing by the mobile personal communications device. The label may contain preferably wireless communication interface for updating the exhibited information.

Indeed, practically any of the various aforementioned elements of the system may contain one or more communication interfaces for communicating with other element(s) of the system and/or external entities, such as personal mobile communication devices of users. The interfaces may include wired and wireless interfaces. A LAN (e.g. Ethernet) interface may be provided. An RFID, NFC, Bluetooth™ and/or WLAN interface may be provided.

In one embodiment, a method for purchasing products in a physical store comprises
- obtaining an electronic mobile personal communications device, preferably a hand-held smartphone or tablet computer, comprising a processing unit for processing instructions and data, a memory for storing instructions and data, respectively, a display for visualizing data, a user input interface for obtaining user input from a user of the device, a product data interface for wirelessly obtaining product data, and a wireless communication network interface for communicating with a network server,
capturing, via said product data interface, a number of product codes, associated with a corresponding number of products selected by the user for purchase, and establish an virtual shopping cart preferably visualized via the display, said cart accommodating an indication of the products therein,
adding up the amounts associated with the products and preferably visualizing the total via the display,
receiving, via the user input interface, confirmation from the user for the transaction having regard to the products in the cart and the total, and
communicating, via the wireless communication network interface, an indication of the user-confirmed transaction to the server, wherein the transaction is wirelessly indicated to store equipment for checking out at the store.

In another embodiment, a method for providing mobile payments of products in a physical store, to be performed by an electronic system, comprises
storing user account data for mobile wallets of a number of users in a data repository, optionally a database, including balance data and preferably history data having regard to past transactions, optionally including transaction amounts and descriptions,
updating account data stored in the repository including the balance of a user transaction processing module in response to receiving an indication of a user-confirmed transaction having regard to the account associated with the user,
wirelessly obtaining, from the mobile personal communications device of the user at local store equipment preferably functionally connected to said transaction processing module, an indication of a user-confirmed transaction having regard to a purchase of a number of products in said store,
verifying the transaction based on the indication, and
providing related, at least visual, feedback to the user.

The method of the present invention may be embodied in a tangible, non-transitory carrier medium such as memory card, USB (Universal Serial Bus) stick or optical disc as a computer program product. Further, the computer program may be transferred as a wired or wireless signal from a transmitting element to a receiving element, which may refer to two communication computer devices.

The previously presented considerations concerning the various embodiments of the device or system may be flexibly applied to the embodiments of the methods mutatis mutandis as being appreciated by a skilled person.

The utility of the present invention arises from a plurality of issues depending on the embodiment. As the present-day people are well acquainted with personal digital gadgets such as cell phones and tablets, they know almost inherently how to use them effectively, carry them everywhere and like to use them for various different purposes. It's therefore preferable and completely natural that also shopping and payments activities are performed by means of such devices instead of dedicated special tools such as shop-specific rental scanners, hand-written shopping carts, cash money or traditional credit cards. Also the ordinary problems with credit cards (forgotten PIN codes, lost cards, misuse, etc.) are thus naturally reduced.

Through the utilization of various embodiments of the present invention, the customers may use their beloved mobiles also as electronic shopping carts and wallets that enable in-store payments and self-checkout cleverly directly via the familiar mobile UI, while the transaction may still be conveniently verified at the checkout also by the store gear to enable fluent exit from the store premises. The products may be added into the electronic shopping cart right upon physically picking them up and there's no need to go through them separately at the checkout anymore.

The customers may be provided with personalized service via the mobile devices. The service may include personalized product promotions, location and navigation service, purchase history logs ('what was the absolutely great beef spice I bought half a year ago'-> 'let me see'), etc. The product suggestions, offers, ads, etc. may be personalized based on user-defined preferences (user profile) and/or automated profiling, i.e. the customer preferences are at least partially automatically determined based on the items included in the shopping carts. Even the traditional service offered in the stores by sales personnel may be personalized responsive to user identification data provided to the store equipment (store computer system) by the mobile devices.

The store may obtain behavioural data and profile data of the customers for establishing different statistics, for instance, which may facilitate enhancing the services provided by optimized product portfolio, opening times, number and type of personnel, etc., while need to invest in completely new special devices such as rental scanners remains minimal. Instead, many embodiments of the present invention may be realized by properly reprogramming the existing gear already available at the stores or data centres thereof.

Different loyalty programs and accounts may be digitally associated with the customer's digital wallet. In addition, the wallet may be funded from various sources such as bank accounts, credit companies, online payment systems, etc. Vice versa, funds may be transferred to external systems.

Different user-specific usage rules may be assigned to each account, or to a particular user of an account in case the same virtual wallet is utilized by multiple persons (e.g. family members).

The rules may define allowed locations, or 'stores', wherein the account may be debited. Yet, the rules may additionally or alternatively define usage limits, e.g. daily or weekly allowance (handy for children, for instance).

Spending may be easily monitored by the account owner or other allowed, registered person (e.g. parent if the account itself is associated with a kid). Accordingly, financial problems and risks may be proactively recognized.

The mobile wallet is secure as both the application activation and payment confirmation as well as other procedures associated therewith, may be linked with mandatory authentication, such as biometric authentication based on e.g. fingerprint recognition and/or voice (speaker) recognition.

Adoption of various embodiments of the present invention releases store personnel from ordinary supervision and checkout responsibilities. Instead, they may concentrate on providing top-notch service and assistance to the customers, which adds directly to the customer experience ultimately affecting also sales in a positive manner as the good reputation of the store grows. And as explained herein, the provided service may be more personal due to the possibility to automatically identify the customer upon arrival at the store or e.g. particular department of the store based on the mobile data obtained.

Various other advantages will become clear to a skilled person based on the following detailed description.

The expression "a number of" refers herein to any positive integer starting from one (1), e.g. to one, two, or three.

The expression "a plurality of" refers herein to any positive integer starting from two (2), e.g. to two, three, or four.

The terms "first" and "second" do not denote any order, quantity, or importance, but rather are used to distinguish one element from another.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

### BRIEF DESCRIPTION OF THE DRAWINGS

Various embodiments of the present invention are described below in more detail with reference to the appended drawings.
Figure 1 illustrates one possible use scenario of an embodiment of a mobile personal communications device and a system of the present invention.
Figure 2 depicts an embodiment of a mobile personal communications device of the present invention.
Figure 3 depicts an embodiment of a system in accordance with the present invention.
Figure 4 is a flow diagram of an embodiment of a first method in accordance with the present invention.
Figure 5 is a flow diagram of an embodiment of a second method in accordance with the present invention.

### DETAILED DESCRIPTION

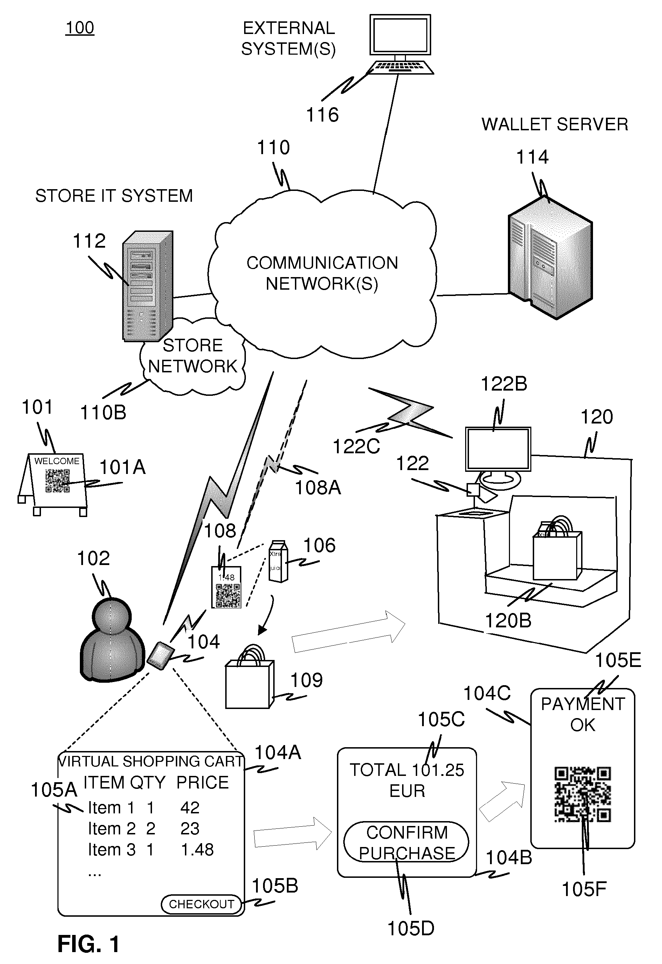

Figure 1 illustrates, at 100, a use scenario of an embodiment of a mobile personal communications device and system of the present invention.

The user 102, or 'customer', carries a mobile personal communications device 104, such as a cell phone (e.g. a so-called smartphone capable of downloading and executing various software applications), phablet or tablet, or other suitable hand-held or e.g. wristop apparatus, while visiting a store. The user 102 may further have physical transport gear 109 such as a bag, basket or cart for transporting goods at the store premises from the pick-up location to destination such as checkout or a parking lot outside the store.

The device 104 has been provided with a stand-alone or e.g. web-based client application that is configured to implement the features of virtual shopping cart 104A and mobile payment in accordance with an embodiment of the present invention.

Advantageously, the device 104 comprises a communication network interface for wirelessly communicating 102 with remote elements such as remote servers including payment, or 'wallet', server 114. The network interface may comprise a cellular network transceiver, e.g. 2G (2^{nd} generation), 3G, 4G, or 5G network transceiver, and/or a wireless LAN (WLAN) transceiver, for instance. A further option is Bluetooth™ or Bluetooth Low-Energy ™ based communication.

The communication network(s) 110 enabling the communication between the device 104 and e.g. payment server 114 keeping track of user accounts, i.e. virtual wallets, and related payments or other transactions may include the Internet, for instance. Further, local networks such as store LAN 110B or other internal/local network may be provided. The various networks 110, 110B may be connected together by a number of gateways. For example, checkout equipment 120 and other IT equipment of the store such as server(s) 112 may mutually communicate 122C using the store's intranet 110B. Alternatively or additionally, the checkout equipment 102 may be configured to directly communicate with external network(s) 110 and e.g. wallet server 114 through them.

Optionally, the device 104 may be allowed to connect to the local network 110B. There may alternatively be a separate parallel customer network within the store for the customer communication. The intranet 110B or corresponding parallel customer network may be configured to enable e.g. product, navigation and/or marketing data provision to the mobile application or provide mobile Internet connections.

Upon entering the store and/or within the store, the user 102 may notice, if any, a display, e.g. so-called A-board, 101 provided with identifier 101A that is optically readable or otherwise wirelessly readable, e.g. via RFID or NFC technology, by the device 104. The display may optionally be at least partially electronic, e.g. a flat screen implemented using suitable technology such as (O)LED ((organic) light-emitting diode) or LCD (liquid-crystal display) technology.

The identifier 101A may be provided in the form of a bar code or a matrix code, for example.

The identifier 101A indicates and identifies the store to the device 104 and ultimately client application therein. The identifier 101A is thus preferably unique to the location, e.g. store-specific. Accordingly, the device 104 maintains or is at least connected to information that includes identifier-specific and therefore location/store-specific settings for the application. The settings may be user-adjustable. The settings may at least partially determine e.g. the outlook of the application view on the display, UI layout, shopping cart format, shopping cart items, floor plan or other map type to be used, search functionality, etc.

Alternatively, as mentioned hereinbefore the identifier 101A may be generic and just indicate to the reading device 104 that the application should be activated or e.g. initialized (reset). It 101A may thus be generally associated with the application instead of the actual location or store name.

In some embodiments, the device 104 may be configured to wirelessly indicate, e.g. via Bluetooth, WLAN, NFC, RFID, or cellular connection, to the store equipment (e.g. a back-end server 112) an identifier that is associated with the device 104 and/or a user thereof. The identifier may have been included in the digital customer records maintained and optionally linked with a loyalty program, for example. Responsive to capturing such identifier, the user may be provided with personalized service through the device 104 and/or otherwise. For instance, store personnel may be digitally alerted via available messaging channels (e.g. cellular communication, pagers, e-mail, etc.) about the recognized customer; appropriate customer responsible person may be informed or requested to arrive at the scene.

As the user 102 walks and operates within the store and sees interesting products 106 the device 104 may be utilized to add such in the virtual shopping cart 104A maintained by the application therein upon product pick up and placement in the transport gear 109. Each product 106 is preferably associated with a product identifier, i.e. product code, which can be captured by the device 104 so that the virtual shopping cart is updated with the corresponding product data such as description, price data, etc.

In some embodiments, the user 102 may have provided (inputted via the UI or uploaded) a virtual shopping list in advance to the application, whereupon during the actual shopping round the list with a number of initial items may be shown on the display as a memory back-up and updated based on the really picked up items as indicated by the product data interface. For example, the picked up quantity/pick up status and related data such as price may be indicated next to the original item in the visualized shopping list, if any. Completely novel items (not present in the list) that are still picked up during the shopping round may be inserted in the same view as new rows, for example. Thus the virtual shopping cart and list may be functionally merged for the convenient visualization.

The product code 108 may be optically readable code, such as visible matrix or barcode, or otherwise wirelessly readable code, such as electromagnetically readable code stored in a passive or active tag device.

The code may be integral with the product 106 or product packaging, e.g. printed thereon or embedded (e.g. tag) therein, or it may be attached to product label in connection with a product shelf, stand or other near-by support structure for reading upon product pick up. Optionally, the label/tag is provided with a data transfer interface for communicating 108A with external elements such as store IT server or other infrastructure 112 providing product data such as price updates to the labels. Same technology such as NFC may be used for information transfer with both the device 104 and the store IT gear 112.

The application view 105A on the display of the device 104 may visualize at least part of a list of items currently present in the virtual shopping cart. Item/product description, quantity, price, unit price, total, etc. may be indicated. The view 105A is preferably automatically updated to reflect the identified product codes read or otherwise captured using the product data interface such as camera or tag reader of the device 104. The application may be configured so as to enable also convenient removal of items from the cart, e.g. 'one click' or 'one touch' removal. Besides twiddling with device UI such as touchscreen to manually add or remove items from the cart, also other options for adapting the cart do exist.

For instance, the product data interface may be applied so that the identification of the same product code repeatedly converts into automatic removal of related product from the cart or user prompt asking to verify whether another instance of the same product is to be added in or the existing one to be deleted from the cart.

The basic view 105A used for inspecting and updating the current status of the shopping cart may further include a UI feature 105B such as icon for initiating a checkout and related payment procedure. Responsive to user selection, e.g. via touchscreen, key or button press or voice input, a confirmation view 104B may be reproduced on the display. The view 104B may include transaction details such as total 105C and a specific UI feature 105D such as icon for confirming the transaction. Thereafter, the mobile device 104 may be configured to send a confirmation message to the wallet server 114 that deals with the transaction and updates e.g. the user account data accordingly, and preferably sends acknowledgement back to the device 104.

For example, the server 114 may deduct the total from the user account, store the related transaction details and/or signal to an external system (e.g. the store or other recipient of funds, or a related intermediate party such as payment operator) about the transaction and payment.

The device 104 may indicate the outcome of the payment operation via a display view 104C. A text 105E may be shown to explicitly state whether the payment was successful or not.

In the case of successful payment, a code 105F such as a barcode or matrix code may be established according to predetermined coding scheme and shown via the display. The code 105F may identify the transaction by the associated details such as transaction number, total, item data, user identity, verification data, etc. The user 102 may now position the device 104 within range of the reader 122 at least functionally connected to the checkout equipment 120. The code 105F is captured by the reader 122 and utilized for verifying the transaction.

Additionally or alternatively, the code may transmitted using rf communication and e.g. NFC, Bluetooth ™ or WLAN technology. The reader may in that case comprise a compatible receiver. The location of the receiver may be visually indicated at the equipment 120 using e.g. a graphical pattern and/or text.

The equipment 120 or connected back-end system 112 may for example verify the code 105F against predetermined criteria and/or connect to the wallet server 114 and/or external system(s) 116, such as financial institution (bank, etc.) or other third party intermediate system, for executing the verification. For example, it may be verified whether the indicated transaction finds proof in the bank account or similar database in the possession of the store in terms of received or at least indicated to-be-received funds.

As a response, a receipt may be provided to the user 102. The receipt may be printed on a paper and/or provided electronically e.g. directly to the device 104 using wireless communication such as short-range NFC communication, Bluetooth™, WLAN or similar communication. Alternatively, the electronic receipt may be provided to an e-mail address or other electronic address associated with the user or user account that has been indicated.

The verification procedure may involve a number of additional checks such as weight check using e.g. electronic weighing machine or balance 120B and reference data collected from a product database based on the indicated shopping cart details (items listing). The weighting procedure may involve taking the type of the gear 109 into account. If the gear 109 is standard, e.g. typical bag or basket, or cart, it may be optically or otherwise detected and effect thereof neutralized from the weight analysis automatically.

A display 122B may be configured to visualize the outcome of the verification and provide related information to the user ('Payment cleared, checkout ready, have a nice day and welcome back!').

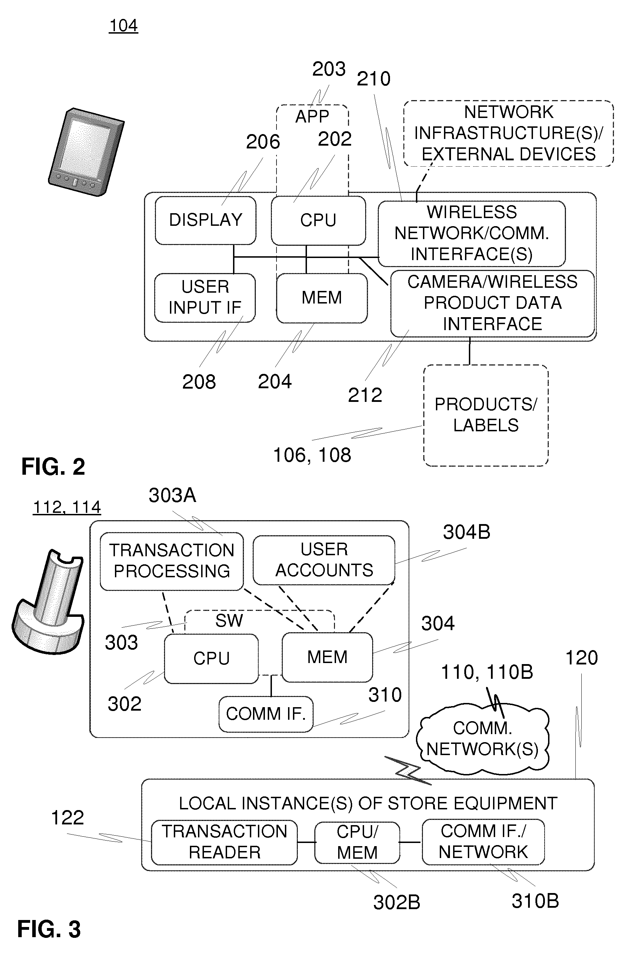

Figure 2 depicts an embodiment of a mobile personal communications device 104 of the present invention. The actions performed by the device 104 for carrying out the functionalities described herein may be controlled by a processing module or processing unit 202, which may contain a number of processing devices such as microprocessors, microcontrollers, digital signal processors, etc. In case of multiple devices, they may be functionally connected via appropriate data buses. Memory 204 may be configured to contain program code (instructions) in the form of processor-executable application 203 and other data for the purpose. It 204 may include a number of memory devices such as chips, which may be separate and/or integral with the processing unit 202.

Display 206 is used for visualizing data such as the virtual shopping cart and various UI features such as active icons of the shopping and payment application 203 to the user. User input interface 208 establishes at least part of the user interface (UI) of the device together with the display 206. The interface 208 may contain a number of buttons, keys (or keypad), switches and/or a touchscreen (potentially integrated with the display 206) for obtaining user input to control the payment activities via the application 203, for instance.

Communication network interface 210 refers to communication element(s), e.g. a transceiver, for wirelessly communicating with external elements such as a wallet server 114 and optionally store equipment 112, 120. The interface 210 may comprise e.g. a wireless transceiver operable in a cellular (e.g. GSM, 3G/UMTS, 4G, 5G) network and/or a wireless local area, or 'WiFi', network (WLAN).

Product data interface 212 refers to equipment for obtaining product data such as product codes from the products or product packages, or near-by labels, for instance. Such equipment may include camera for optical acquisition of such data and/or a reader such as NFC or other tag reader for obtaining the data over the rf band (e.g. LF (low frequency), microwave or somewhere in between in terms of actual frequencies used).

Instead of or in addition to tag readers, the device 104 may include a number of other short-range transmitters, receivers or transceivers such as Bluetooth™ or Bluetooth Low Energy ™ compliant devices for short-range communication or formation of so-called personal area networks.

Yet, the device 104 may include various other elements not explicitly shown in the figure, e.g. a satellite signal receiver such as GPS or GLONASS (GLObal NAvigation Satellite System) receiver.

Figure 3 depicts an embodiment of a system in accordance with the present invention. Unlike a typical personal mobile communication device, the system may contain, and will likely contain, a number of physically distributed elements such as store equipment 120 that is located at store premises for taking care of e.g. payment validation activities upon checkout, for example, and server environment, optionally residing at least partially in a cloud computing environment, 114 for managing user accounts (digital wallets) of users and related transactions. Yet, the system may incorporate store's IT system/server(s) 112 as a part of the overall store equipment for providing e.g. product data, marketing information, location/positioning data to the users. However, a skilled person shall acknowledge the fact that physical distribution of system elements is not necessary, while usually preferred and most sensible, implementation model in most use scenarios. The store itself or other local operator may own/operate the local store equipment, whereas the wallet server 114 may be operated by other party, such as a payment service operator/provider functionally potentially connected to a plurality of stores and e.g. various external systems, such as financial institutions or services.

The elements may include processing unit(s) and memory 302, 302B, 304 as generally deliberated above having regard to the communication device 104. The memory may contain application logic and other data such as user account data (identification data, balance data, event/log data, etc.) and related settings and optionally product data. E.g. a transaction processing module and optionally product data module may be implemented by the combination of such hardware and software.

Further, the necessary communication interface(s) 310, 310B for interelement and external communication (e.g. with personal communication devices and external systems such as systems of financial institutions or stores) are provided. Ethernet interfaces, short-range wireless interfaces, cellular network, WLAN, Bluetooth ™, etc. interfaces may be arranged. The operation of the elements 112, 114, 120 may be controlled by software 303 responsive to program code instructions stored. Transactions such as account deposits, withdrawals (e.g. payment of purchases at stores) are managed relative to the user accounts, i.e. virtual wallets.

The centralized elements such as wallet server 114 may be functionally, e.g. communications-wise, connected to the store equipment 120 by one or more communication links potentially involving communication network(s) 110, 110B such as a store intranet and/or the Internet in between. The communication may include encrypted communication using e.g. 3DES encryption. However, the store equipment 120 does not have to necessarily connect to the server 114 as such for verifying the transaction/payment, for instance, as it 120 may independently verify it by relying on e.g. bank account or generally payment operator data retrieved having regard to the target account whereto the payment was addressed by the server 114.

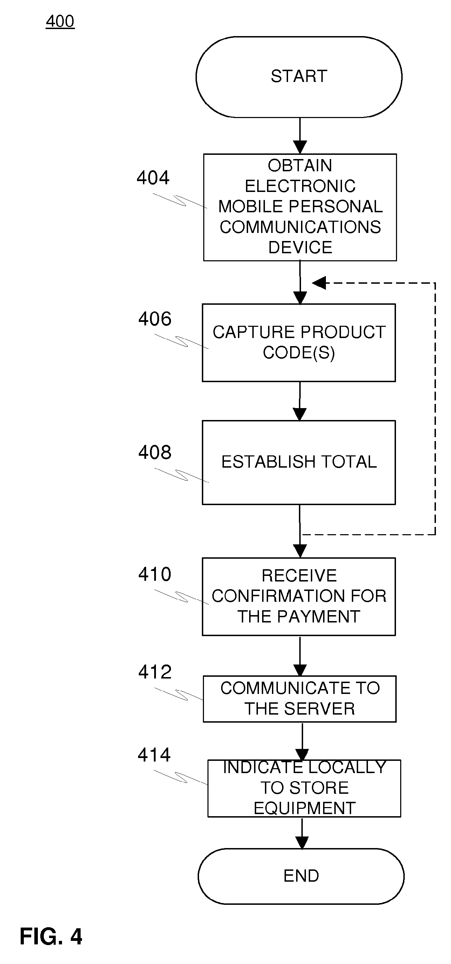

Figure 4 discloses a flow diagram 400 of an embodiment of a first method in accordance with the present invention. The method may be substantially executed by an embodiment of an electronic mobile personal communications device described herein.

Thereby, at 404, necessary preparatory actions such as configuration of a mobile personal communications device are executed. The device may be loaded with client application for establishing a virtual shopping cart and performing mobile payments using the virtual wallet as described herein. The client application may be a stand-alone application. Alternatively, the shopping and payment application may be a web based application exploiting browser-based UI. A shopping list may be established beforehand directly via the UI of the application using the mobile device or separately and just uploaded, optionally via network server/service, for subsequent use in the application during the shopping event.

At 406, the product codes are captured from products, product packages or related labels as explained hereinbefore using the product data interface, which may refer to camera and related imaging gear or short-range rf transfer equipment such as tag reading equipment, for example. The virtual shopping cart is updated accordingly.

At 408, following or in the course of the product data capturing, the total is updated by the communications device based on the item prices. Preferably, the total is shown via the display of the device so that the user may keep track thereof constantly during the shopping round.

At 410, the user confirms his/her intention to pay for the items currently present in the cart. The confirmation may be provided via the UI of the personal communication device, e.g. through selection of a visualized feature such as an icon shown in the application view. The confirmation phase may optionally follow a user-initiated action provided via the UI of the device, such as a selection of a UI feature like icon or virtual button shown in the shopping cart view, and indicating the user's preliminary willingness to proceed from the product collecting phase to a checkout phase.

At 412, a confirmation is signalled to the wallet server for executing the transaction. Together with the confirmation, if not being performed beforehand, transaction data such as total, items purchased, user (buyer) data, recipient (store) data, etc. may be signalled.

In response, an acknowledgement message may be received.

At 414, the user-confirmed transaction is indicated to store equipment for proceeding with checkout. The indication may be a graphical code shown on the display of the communication device to a reader device of the store equipment. The indication may be established based on transaction data, optionally data received from the server in the acknowledgement (e.g. payment/transaction identification number), for instance. Alternatively, the indication may be NFC or RFID based. Optionally, electronic receipt may be received from the store equipment as a response. The receipt may be shown on the display of the communication device. Alternatively or additionally, the store equipment may respond with visual confirmation on a store display and/or print a paper receipt with a paper printer.

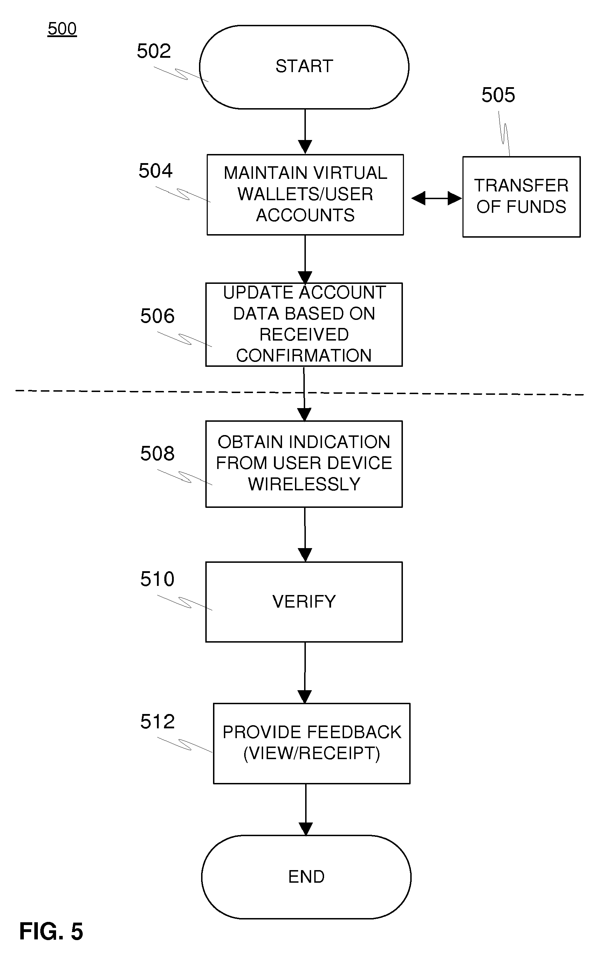

Figure 5 discloses a flow diagram 500 of an embodiment of a second method in accordance with the present invention.

At 502, necessary preparatory actions such as acquisition, installation, and configuration of necessary hardware (server(s), store equipment, communication gear, etc.) are executed.

At 504, user accounts (virtual wallets) are established to a number of users. The accounts may be provided with additional settings such as temporal and/or spatial usage restrictions (time restriction, place restriction, and e.g. total allowed expenditure, optionally per time period, store, and/or purchase action). An account may be associated with an account holder and optional supervisors such as parents that have control over restriction settings, for example. Such data may be stored in a database hosted by the system.

In addition to purchases, transfer of funds relative to external systems such as the ones of financial institutions (deposits, withdrawals) may be executed 505.

At 506, an indication of a user -confirmed transaction, typically purchase decision based on the populated shopping cart, is received at the system. The indication may be sent by a personal communication device of a user at a store upon checkout. The indication may be transferred as or in a message over a number of communication networks such as cellular network(s) and/or the Internet to the recipient on system side, typically a network service implemented by a number of servers.

Responsive to the receipt of such indication, the corresponding payment may be effectuated by the system. The amount indicated may be debited from the concerned user's account and forwarded digitally towards the indicated recipient, typically the store in question, according to the utilized digital payment standard, which may be proprietary or an already existing one (not in the fulcrum of this invention anyhow).

The status of the payment may be then indicated to the communication device of the user (e.g. payment accepted with related details, such as transaction number, etc.) via a message of predefined format.

The broken horizontal line depicted between method items 506 and 508, implies potential switchover from at least conceptually or functionally centralized system side to the local store equipment.

A person skilled in the art will easily comprehend that the method items 504-506 and 508-512 could be also considered as stand-alone innovations and implemented independently even though some clear synergetic benefits are obtained from their mutual application in the same embodiment of the present invention. The same naturally applies to the system devices executing such method items.

At 508, the store equipment receives confirmation of the finalized transaction and related payment from the personal communication device of the user. The received data may identify the purchase using e.g. transaction/payment number, buyer, total, application id, purchased items, verification code(s) and/or other transaction details.

At 510, the transaction is verified. This may be a substantially local procedure or involve communication with remote system(s). For example, account data of the store itself at server 114 or elsewhere (e.g. further financial service/institution such as a bank) may be matched as reference data with the indicated transaction data such as transaction number whether these two match with the same total. Further, product data may be retrieved from a database to determine an estimate of (total) weight of purchased items and compared with data from a weighing apparatus used for weighting the purchased items at checkout. The associated analysis logic may be configured to take the weight of a shopping cart or e.g. basket into account (in many stores, common rental baskets/carts are used by default by the customers to carry the goods so this is fully feasible).

The verification result is indicated to the user at 512, which may refer to digital signalling through provision of a receipt message to the communication device of the user. Alternatively or additionally, a verification message may be generated and shown on a store display at checkout, an electrically controlled exit gate may be opened, and/or a paper receipt be printed. Audible verification message may be reproduced using a loudspeaker by the system. A record in the store database may be updated based on the verified transaction. The store equipment interacting with the user in terms of payment verification (items 508-512), may be physically located at store exit or close to the exit, or additionally/alternatively, e.g. at a central location within the store.

It is clear to those skilled in the art that various modifications and variations can be made to the disclosed embodiments of the suggested device, system and methods. Other embodiments will be apparent to those skilled in the art from consideration of the specification. It is intended that the specification and the explicitly indicated embodiments are considered as exemplary only, the actual scope being indicated by the following claims and their equivalents.

Yet, with reference to various embodiments of the mobile personal communications device disclosed herein, the communication network interface may comprise e.g. a cellular transceiver or a WLAN (wireless LAN) transceiver, as being clear based on the above description.

Having regard to the embodiments of the virtual shopping card, it may include at least one element selected from the group consisting of: product code, product description, amount, quantity, total, currency, balance of the account associated with the cart, and remaining future balance after purchasing the listed products are really bought.

Still, in various embodiments as discussed also hereinearlier, the communications device may indeed be configured to wirelessly obtain positioning data and indicating the position on the display.

For instance, the position of the device and/or a target product may be shown on the display, preferably as superimposed on a digital map or floor plan view of the store.

In various embodiments as discussed also hereinearlier, the communications device may be configured to transmit or receive payment data via the wireless communication network interface in encrypted form, preferably as 3DES coded.

In various embodiments as discussed also hereinearlier, the communications device may be configured to store and visualize, via the display, a user-defined electronic shopping list for listing the items to be acquired during a visit at the store.

In various embodiments as discussed also hereinearlier, the communications device may be configured to authenticate the user for enabling adding items in the virtual shopping cart or executing related payment, utilizing at least one authentication factor selected from the group consisting of: password, passcode, fingerprint, retina, iris, and voice.

In various embodiments as discussed also hereinearlier, the communications device may be configured to wirelessly signal a device or user identifier to the store equipment.

In various embodiments of the electronic system discussed herein, a printer may be included for providing the feedback in printed form, said feedback preferably including a receipt of the transaction.

In various embodiments of the system, the store equipment may be configured to verify the transaction by comparing the indicated data with reference data.

Having regard to various embodiments of the system, also an embodiment of the mobile personal communications device may be included therein.

Having regard to various embodiments of the method disclosed herein for purchasing products in a physical store, a computer program comprising a code means adapted, when run on a computer, to execute the method items involving the described capturing, adding up, receiving, communicating and indicating items, may be provided. Also, a carrier medium comprising such computer program may be provided.

## Claims

1. A mobile personal communications device (104) for purchasing products (106) in a store, said device comprising a processing unit (202) for processing instructions (203) and data, memory (204) for storing instructions and data, respectively, a display (206) for visualizing data, a user input interface (208) for obtaining user input from a user of the device, a product data interface (212) for wirelessly obtaining product data, and a wireless communication network interface (210) for communicating with a remote server (114), the device being configured to, in accordance with the instructions stored in the memory,
capture, via said product data interface, a number of product codes (108), associated with a corresponding number of products selected by the user for purchase, and establish an virtual shopping cart (104A) visualized via the display, said cart accommodating an indication of the products therein,
add up the amounts associated with the products and visualize the total (105C) via the display,
receive, via the user input interface, confirmation (105D) from the user for the transaction having regard to the products in the cart and the total, and
communicate, via the wireless communication network interface, an indication of the user-confirmed transaction to the server,
wherein the device is further configured to wirelessly indicate (105F) the transaction to store equipment (120) for locally checking out at the store.

2. The device of claim 1, configured to indicate the transaction to the store equipment utilizing an optically readable indication shown on the display, preferably a matrix code.

3. The device of claim 1 or 2, comprising a short-range radio frequency transmitter or transceiver and configured to indicate the transaction to the store equipment via short-range radio frequency communication, preferably NFC or RFID communication.

4. The device of any preceding claim, configured to receive an acknowledgement message from the server responsive to the communication, and establish the indication for the store equipment at least partially based thereon.

5. The device of any preceding claim, wherein the product data interface comprises optical capturing equipment for obtaining the product code.

6. The device of claim 5, comprising at least one optical capturing element selected from the group consisting of: a scanner, a laser scanner, a CCD (charge-coupled device) reader, and a camera.

7. The device of any preceding claim, wherein the product data interface comprises a wireless tag reader, preferably NFC (near-field communication) or RFID (radio-frequency identification) tag reader, for capturing the product code.

8. The device of any preceding claim, configured to wirelessly obtain an identifier (101A), such as an optically readable code, configured to activate the virtual shopping cart functionality or adjust the configuration of the virtual shopping cart functionality.

9. An electronic system (112, 114, 120) for enabling mobile payments of physical products in a physical store, comprising
a data repository (114, 304, 304B), optionally a database, configured to store user account data for mobile wallets of a number of users, including balance data and preferably history data having regard to past transactions, optionally including transaction amounts and descriptions (e.g. source/destination),
a transaction processing module (114, 302, 303, 303A) configured to update account data stored in the repository including the balance of a user in response to receiving an indication of a user-confirmed transaction having regard to the account associated with the user, and
store equipment (112, 120) functionally connected to said transaction processing module and configured to wirelessly (122) obtain, from the mobile personal communications device (104) of the user, an indication (105F) of user-confirmed transaction having regard to a purchase of a number of products in said store, wherein the store equipment is configured to verify the transaction based on the indication and provide at least related visual (122B) feedback to the user.

10. The system of claim 9, wherein the store equipment comprises optical scanner or camera for obtaining the indication.

11. The system of any of claims 9-10, comprising a display (101) exhibiting a mobile personal communication device readable or receivable identifier (101A) identifying the store to the application logic in the communication device for activating or configuring the virtual shopping cart functionality.

12. The system of any of claims 9-11, comprising a number of digital product labels (108) to be associated with products, said labels identifying the products and indicating the price thereof.

13. The system of any of claims 9-12, wherein the store equipment (112) is configured to receive a device or user identifier from the mobile personal communications device, match the identifier with customer records and trigger a signal responsive to and indicative of such match to the store personnel or data repository.

14. A method (400) for purchasing products in a physical store comprising
- obtaining (404) an electronic mobile personal communications device, preferably a hand-held smartphone or tablet computer, comprising a processing unit for processing instructions and data, a memory for storing instructions and data, respectively, a display for visualizing data, a user input interface for obtaining user input from a user of the device, a product data interface for wirelessly obtaining product data, and a wireless communication network interface for communicating with a network server,
capturing (406), via said product data interface, a number of product codes, associated with a corresponding number of products selected by the user for purchase, and establish an virtual shopping cart preferably visualized via the display, said cart accommodating an indication of the products therein, adding up (408) the amounts associated with the products and preferably visualizing the total via the display,
receiving (410), via the user input interface, confirmation from the user for the transaction having regard to the products in the cart and the total, and
communicating (412), via the wireless communication network interface, an indication of the user-confirmed transaction to the server, and
wirelessly indicating (414) the transaction to store equipment for checking out at the store.

15. A method (500) for providing mobile payments of products in a physical store, to be performed by an electronic system, comprising
storing user account data (504) for mobile wallets of a number of users in a data repository, optionally a database, including balance data and preferably history data having regard to past transactions, optionally including transaction amounts and descriptions,
updating account data (506) stored in the repository including the balance of a user transaction processing module in response to receiving an indication of a user-confirmed transaction having regard to the account associated with the user,
wirelessly obtaining (508), from the mobile personal communications device of the user at local store equipment preferably functionally connected to said transaction processing module, an indication of a user-confirmed transaction having regard to a purchase of a number of products in said store,
verifying (510) the transaction based on the indication, and
providing related, at least visual, feedback (512) to the user.
